# EUROPEAN PATENT APPLICATION

(11) **EP 1 598 825 A2**
(43) Date of publication of application: **23.11.2005**
(21) Application number: 05252950.0
(22) Date of filing: 13.05.2005
(51) Int. Cl.: G11B 20/12, G11B 27/30

(54) **Information recording medium, recording and/or reproducing method, recording and /or reproducing apparatus, and sync detection apparatus**

(30) Priority: 17.05.2004 KR 2004034632
(71) Applicant: SAMSUNG ELECTRONICS CO., LTD., Suwon-si, Gyeonggi-do (KR)
(72) Inventor: Yoon, Kyeong-Yong, 403,1101, Yeongtong-gu Suwon-si, Gyeonggi-do (KR); Kim, Tae-Woo, Suwon-si Gyeonggi-do (KR)
(74) Representative: Davies, Robert Ean

(57) **Abstract**

An information recording medium on which a data signal having a variable frequency oscillator (VFO) signal part (46) and a data signal part (48) are recorded, wherein an indicator (47) having a pattern distinguishable from a pattern used in the VFO signal part is included at a predetermined position within the VFO signal part, a method of recording and/or reproducing the information recording medium having the indicator in the VFO signal part, and an apparatus to record and/or reproduce the information recording medium having the indicator in the VFO signal part.

## Description

The present invention relates to an information recording medium, a recording and/or reproducing method, a recording and/or reproducing apparatus, and a sync detection apparatus by which decoding performance is improved by predicting the position of a frame sync in a data signal recorded on an information recording medium.

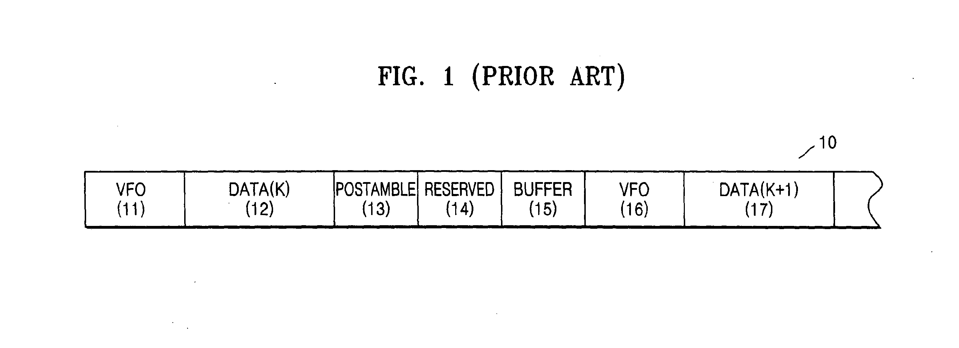

First, the structure of data recorded on an RW series disk according to the conventional technology will be explained. FIG. 1 is a diagram of the structure of data which is recorded on an RW series disk according to the conventional technology. Referring to FIG. 1, the data structure 10 includes a variable frequency oscillator (VFO) field 11, a data (K) field 12, a postamble field 13, a reserved field 14, a buffer field 15, a VFO field 16, and a data (K+1) field 17.

The VFO field 11 is disposed at the front of a data signal format, and a predetermined pattern is repeatedly recorded in the VFO field 11. By controlling the oscillation frequency of a phase locked loop (PLL) when a data signal is reproduced, the VFO pattern enables the data signal to be reproduced with reliability. This pattern includes many pieces of edge information items, that is, intervals that repeat briefly. This is because it is easy for many pieces of edge information items to perform a PLL pull-in operation in relation to this pattern.

The data (K) field, in which user data is actually recorded, is usually provided in one ECC block. The postamble field 13, the reserved field 14, and the buffer field 15 are areas that are attached to the end part of one data recording block.

For one ECC block, recording is performed from the VFO field 11 to the buffer field 15.

The VFO field 16 comes first in order to record a next ECC block. Data of the next ECC block is actually recorded in the data (K+1) field 17.

The data structure shown in FIG. 1 is a case where data (K) and data (K+1) are continuously recorded.

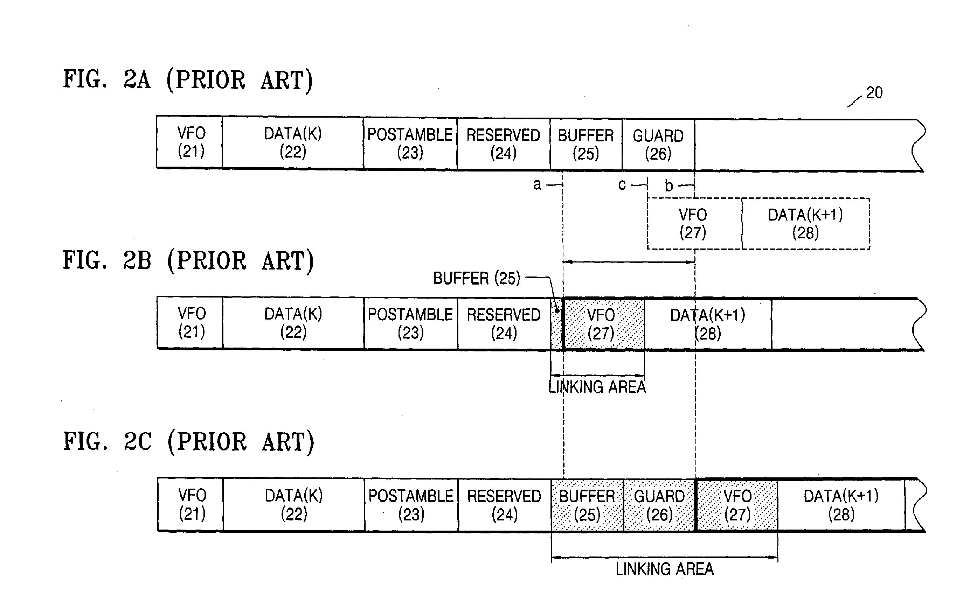

Referring to FIGS. 2A-2C, a case where data (K) and data (K+1) are discontinuously recorded, that is, where data (K) is recorded in a previous recording operation, and data (K+1) is recorded in a succeeding operation, will now be explained. FIGS. 2A-2C are reference diagrams illustrating a linking area when recording of data begins again on an RW series disk according to the conventional technology. Referring to FIG. 2A, the data structure 20 includes a VFO field 21, a data (K) field 22, a postamble field 23, a reserved field 24, a buffer field 25, and a guard field 26.

The VFO field 21, the data (K) field 22, the postamble field 23, the reserved field 24, and the buffer field 25 are the same as explained with reference to FIG. 1. However, in FIG. 2A, since the recording operation is finished by recording data (K) 22 in the previous recording operation, the guard 26 is further recorded after the buffer 25. In this state, in order to record data (K+1) in the succeeding recording operation, the first part c of the VFO 27 disposed at the front of data (K+1) 28 should be arranged in an area formed by the buffer 25 and the guard 26. That is, the first part c of the VFO 27 should be located variably within an area formed by the buffer 25 and the guard 26, in other words, within an interval formed by a and b. The reason for being located variably is to prevent degradation of a disk from occurring by the front part of the VFO 27 starting at a fixed position.

Referring to FIG. 2B, the first part c of the VFO 27 is recorded from a position that is a short distance behind a position where the buffer 25 begins. In this case, the linking area is formed by the buffer 25 and the VFO 27.

Referring to FIG. 2C, the front part of the VFO 27 is recorded from a position b at which the guard 26 ends. In this case, the linking area is the one that is formed by the buffer 25, the guard 26, and the VFO 27. Thus, the position at which the front part of the VFO 27 is arranged is variable, and accordingly the interval of the linking area becomes variable, not constant.

That is, when linking occurs in a DVD-RAM, HD, or DVD-RW, the length of a linking area is determined by random generation according to a strategy to prevent intensive degradation of a disk, and therefore is variable.

Also, since the patterns of a file forming a linking area are identical, the linking area is formed by repeating a predetermined identical pattern such that each field forming the linking area cannot be distinguished.

Meanwhile, in an optical disk reproducing apparatus, a bitstream read from a disk is reproduced, i.e., changed to a desired data format, through processes including demodulation and error correction. At this time, a frame sync is used as a synchronization signal to store the bitstream in a predetermined location of a memory and to perform error correction. Accordingly, if an incorrect frame sync can be detected and inserted, it causes an error when data reproduction is desired. As a result, many methods have been developed by which a frame sync is detected, and when the frame sync is not detected, a generated frame sync is inserted into a frame sync generation position.

According to the conventional methods to detect and insert a frame sync, generally, the number of frame syncs to be inserted is determined in advance, and if the same number of frame syncs are not detected continuously in an input bitstream, a protection window is opened and, based on an unconditionally detected frame sync, the window is reset. For example, assuming that the number of frame syncs to be inserted is determined to be 8, while frame syncs are normally detected, if 8 continuous frame syncs are not detected in a protection window, a generated frame sync is inserted into each position where a frame sync should be found, and a window is opened to detect frame syncs. At this time, if an error frame sync is detected, based on this detected frame sync, the position of the window is reset. Accordingly, if a normal frame sync is detected after that time, the input frame sync is not in the protection window, such that a maximum of 8 frame syncs will be lost. A normal frame sync is detected after a window is opened again, that is, after 8 frames, and the probability that error data is included in data reproduced through processes such as demodulation or error correction is increased. Also, if the number of frame syncs to be inserted is set at a smaller number, the frequency of opening a window increases such that the probability that error frame syncs are detected is increased. In addition, often a bitstream of one frame volume cannot be stored in a memory due to error frame syncs detected in the process of opening and closing windows.

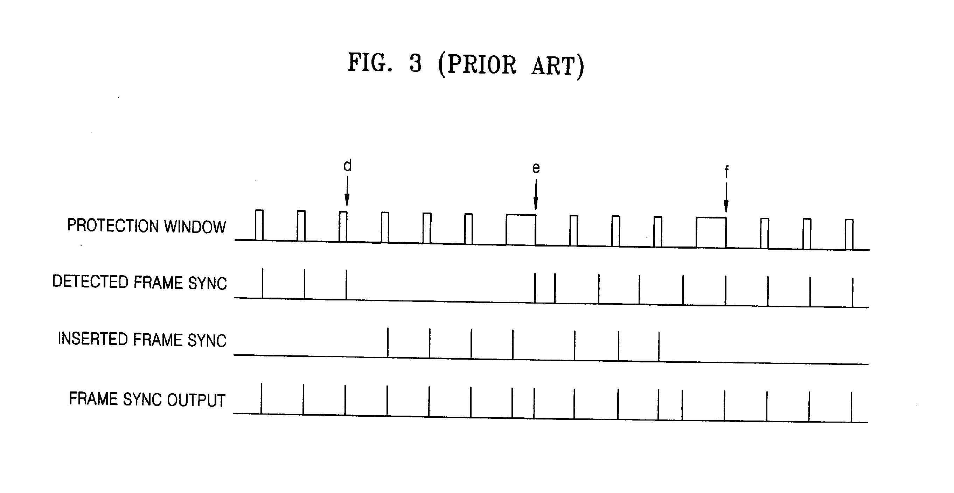

FIGS. 3A-3D are timing diagrams illustrating frame sync detection and restoration when data recorded on an RW series disk is reproduced according to the conventional technology. Referring to FIGS. 3A-3D, which illustrates the concept of conventional frame sync detection and insertion, since an optical disk reproduction signal is abnormally output at position d, frame syncs are not detected from the position d. Accordingly, frame sync insertion is performed, and if four consecutive frame syncs are not detected, a protection window is opened and frame sync detection begins. Here, the protection window opens when 4 frame syncs are inserted. When the protection window is opened, that is, at position e, an error frame sync is located outside the protection window and is not detected. A window is opened again after 4 frames, and from position f where a normal frame sync is detected, frame syncs start to be normally generated.

Meanwhile, as described above, a linking area can be included in a data structure recorded on a rewritable recording medium, and the length of the linking area is variable. That is, since from the viewpoint of decoding it cannot be determined how far the length of a linking area extends, the stabilization state of a system should be initialized and a sync pattern should be detected whenever an ECC unit finishes, even when the state of the system has been stable and frame syncs have been normally detected so far. This is because when an error occurs in a sync pattern in a linking area part, sync insertion based on system stabilization is impossible. As a result, the decoding performance should be lower than when the length of a linking area is predictable.

An aim of embodiments of the present invention is to provide a rewritable recording medium, a recording and/or reproducing method, a recording and/or reproducing apparatus, and a sync detection apparatus by which decoding performance can be improved by predicting the start of a next frame through prediction of the length of a linking area in a data signal string recorded on a rewritable recording medium.

Additional aspects and/or advantages of the invention will be set forth in part in the description which follows and, in part, will be obvious from the description, or may be learned by practice of the invention.

According to an aspect of the present invention, there is provided a rewritable recording medium on which a data signal having a variable frequency oscillator (VFO) signal part and a data signal part are recorded, wherein an indicator having a pattern which a reproducing apparatus uses to distinguish the indicator from a pattern used in the VFO signal part is included at a predetermined position within the VFO signal part.

The indicator may be one of a plurality of indicators included within the VFO signal part.

The plurality of indicators may be separated by predetermined intervals.

According to another aspect of the present invention, there is provided a method of recording a data signal having a VFO signal part and a data signal part on a rewritable recording medium, the method comprising: recording the VFO signal part in which an indicator having a pattern which a reproducing apparatus uses to distinguish the indicator from a pattern used in the VFO signal part is arranged at a predetermined position within the VFO signal part, on the rewritable recording medium.

The indicator may be one of a plurality of indicators arranged at predetermined positions within the VFO signal part.

According to still another aspect of the present invention, there is provided a method of reproducing a data signal having a VFO signal part and a data signal part on a rewritable recording medium, the method comprising: detecting an indicator in the VFO signal part, the indicator having a pattern which a reproducing apparatus uses to distinguish the indicator from a pattern used in the VFO signal part; and decoding the data signal part by detecting and inserting a sync pattern of the data signal part based on the indicator detection.

Detecting the indicator may comprise detecting at least one of a plurality of indicators in the VFO signal part.

Decoding the data signal part may include: resetting a protection window a predetermined time after the indicator is detected; and based on the reset protection window, detecting and inserting a frame sync.

According to yet still another aspect of the present invention, there is provided an apparatus to record a data signal having a VFO signal part and a data signal part on a rewritable recording medium, the apparatus comprising: a control unit to control recording such that the VFO signal part, in which an indicator having a pattern which a reproducing apparatus uses to distinguish the indicator from a pattern used in the VFO signal part is arranged at a predetermined position within the VFO signal part, is recorded on the rewritable recording medium.

According to a further aspect of the present invention, there is provided an apparatus to reproduce a data signal having a VFO signal part and a data signal part on a rewritable recording medium, the apparatus comprising: a decoding unit to detect, from the VFO signal part, an indicator having a pattern which a reproducing apparatus uses to distinguish the indicator from a pattern used in the VFO signal part, and to decode the data signal part by restoring a sync pattern of the data signal part based on the indicator detection.

According to an additional aspect of the present invention, there is provided an apparatus to detect a sync from a data signal having a VFO signal part and a data signal part recorded on a rewritable recording medium, the apparatus comprising: an indicator detection unit to detect an indicator in the VFO signal part, the indicator having a pattern which a reproducing apparatus uses to distinguish the indicator from a pattern used in the VFO signal part; and a sync output unit to output a sync by detecting and inserting a sync pattern of the data signal part based on the indicator detection.

The indicator detection unit may detect at least one of a plurality of indicators from the VFO signal part.

The sync output unit may include a protection window reset unit to output a protection window reset signal a predetermined time after the indicator is detected; and a frame sync detection and insertion unit to reset a protection window in response to the protection window reset signal, and to detect and inserts a frame sync according to the reset protection window.

According to another aspect of the present invention, there is provided an apparatus to record a data signal having a variable frequency oscillator (VFO) signal part and a data signal part on an information recording medium, the apparatus comprising: a control unit operable to control recording such that the VFO signal part, in which an indicator having a pattern which a reproducing apparatus uses to distinguish the indicator from a pattern used in the VFO signal part is arranged at a predetermined position within the VFO signal part, is recorded on the information recording medium.

For a better understanding of the invention, and to show how embodiments of the same may be carried into effect, reference will now be made, by way of example, to the accompanying diagrammatic drawings in which:
FIG. 1 is a diagram of the structure of data which is recorded on an RW series disk according to the conventional technology;
FIGS. 2A-2C are reference diagrams illustrating a linking area when recording data begins again on an RW series disk according to the conventional technology;
FIGS. 3A-3D are timing diagrams illustrating frame sync detection and restoration when data recorded on an RW series disk is reproduced according to the conventional technology;
FIGS. 4A-4C are diagrams of data frame structures according to an embodiment of the present invention, in which an indicator is inserted into a VFO signal part before the data frame is recorded;
FIGS. 5A-5C are timing diagrams illustrating a concept of resetting a protection window with reference to an indicator inserted into a VFO signal part according to an embodiment of the present invention;
FIGS. 6A-6D are timing diagrams illustrating a concept of detecting and restoring a frame sync with reference to an indicator inserted into a VFO signal part according to an embodiment of the present invention;
FIG. 7 is a schematic block diagram of the structure of a recording apparatus according to an embodiment of the present invention;
FIG. 8 is a schematic block diagram of the structure of a reproducing apparatus according to an embodiment of the present invention; and
FIG. 9 is a flowchart of the operations performed by a method of detecting and restoring a frame sync according to an embodiment of the present invention.

Reference will now be made in detail to the embodiments of the present invention, examples of which are illustrated in the accompanying drawings, wherein like reference numerals refer to the like elements throughout. The embodiments are described below to explain the present invention by referring to the figures.

Even when a linking area due to a rewrite operation occurs in a rewritable medium such as a DVD-RAM, HD, and DVD-RW, embodiments of the present invention can improve decoding performance by enabling prediction of the position of a succeeding frame. That is, when linking by rewrite occurs, the linking area has a variable length. However, by inserting an indicator having a pattern distinguishable from a variable frequency oscillator (VFO) pattern in a VFO field, and detecting this indicator in the data signal, the position of a succeeding frame can be predicted. Therefore, prediction of the position of a frame sync of the succeeding frame is enabled, which improves the decoding performance.

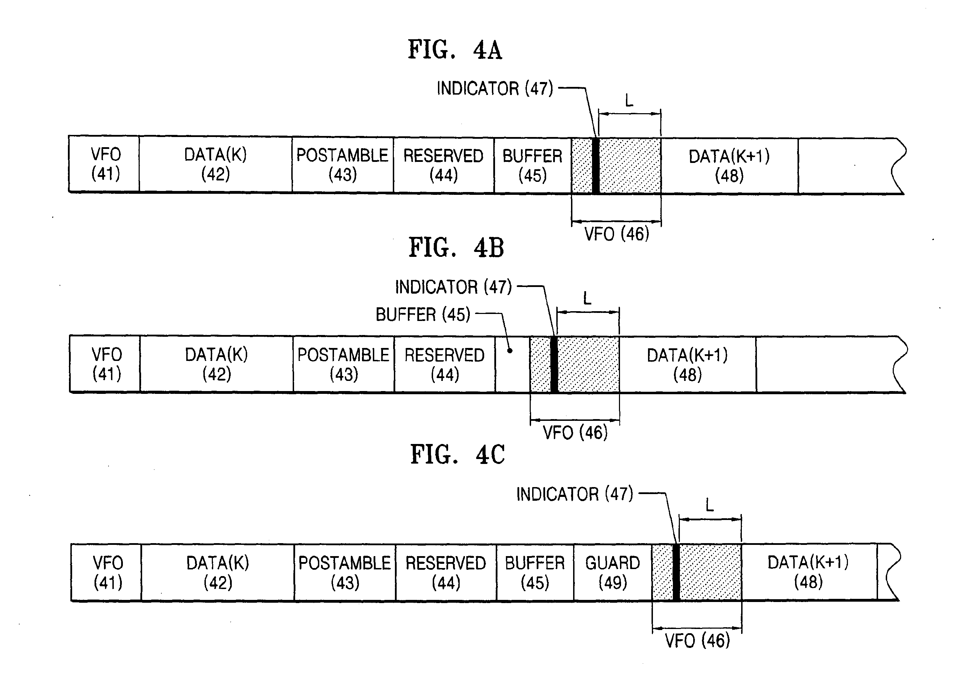

First, the structure of a data frame in which an indicator is inserted according to an embodiment of the present invention will now be explained. FIGS. 4A through 4C are diagrams of data frame structures according to this embodiment of the present invention, in which an indicator is inserted into a VFO signal part before the data frame is recorded.

Referring to FIG. 4A, a data string includes a VFO field 41, a data (K) field 42, a postamble field 43, a reserved field 44, a buffer field 45, a VFO field 46, and a data (K+1) field 48. Detailed areas of the data string are the same as explained with reference to FIG. 1, and the structure according to this embodiment of the present invention is characterized in that an indicator 47 is disposed in a predetermined position of the VFO 46. In FIG. 4A, a linking area is formed with the buffer 45 and the VFO 46. While shown in the context of the fields also shown in FIG. 1, it is understood that aspects of the invention can be used in other data strings than that shown in FIG. 1.

A predetermined time, that is, an interval L, after the indicator 47 is detected at a predetermined position of the VFO 46, the data (K+1) 48 begins. That is, if an indicator 47 formed with a pattern different from the pattern used in a linking area is disposed in advance at a predetermined position of a VFO, then by detecting the indicator 47 in the VFO 46 when decoding is performed, it can be predicted that data (K+1) 48 begins after a predetermined interval, that is, an interval L.

Referring to FIG. 4B, a data string includes a VFO field 41, a data (K) field 42, a postamble field 43, a reserved field 44, a buffer field 45, a VFO field 46, and a data (K+1) field 48. As shown in FIG. 4A, an indicator 47 is disposed at a predetermined position of the VFO 46, but in the data string of FIG. 4B, the front part of the VFO 46 begins in the middle part of the buffer 45. In FIG. 4B, the linking area is formed with the buffer 45 and the VFO 46.

Referring to FIG. 4C, a data string includes a VFO field 41, a data (K) field 42, a postamble field 43, a reserved field 44, a buffer field 45, a guard field 49, a VFO field 46, and a data (K+1) field 48. As shown in FIGS. 4A and 4B, an indicator 47 is disposed at a predetermined position of the VFO 46, but in the data string of FIG. 4C, the front part of the VFO 46 begins after the guard 49. In FIG. 4C, the linking area is formed with the buffer 45, the guard 49 and the VFO 46.

The positions of the linking areas and the lengths of the intervals are different in each of FIGS. 4A through 4C, but by inserting the indicator 47 into a predetermined position of the VFO 46, the starting position of succeeding ECC data, data (K+1), which comes at a predetermined interval, that is, an interval L, after the position of the indicator 47, can be predicted. Thus, since the position from which the next data block begins after the linking area ends can be predicted, frame sync detection and restoration can be efficiently performed at the position where the next data block begins.

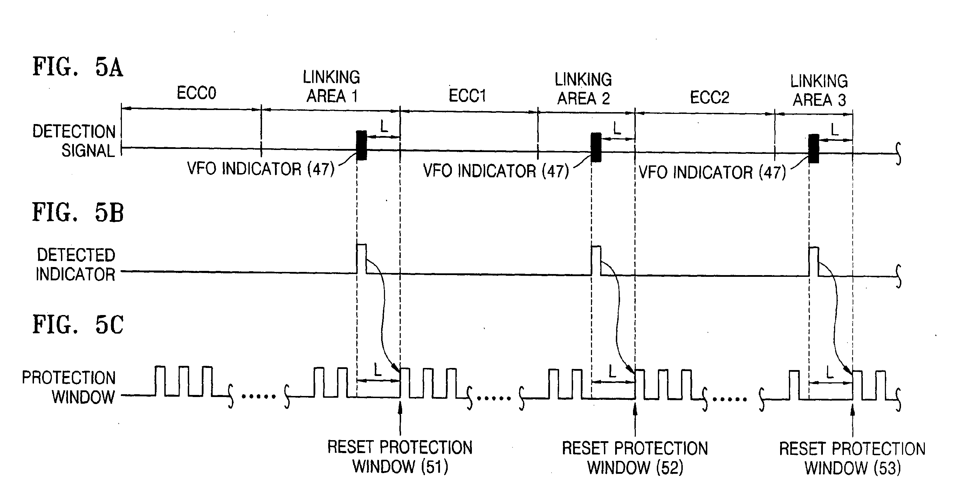

FIGS. 5A-5C are timing diagrams illustrating a concept of resetting a protection window with reference to an indicator inserted into a VFO signal part according to an embodiment of the present invention. FIG. 5A illustrates a detection signal of a reproduction signal string, FIG. 5B illustrates indicators detected in the reproduction signal string of FIG. 5A, and FIG. 5C illustrates protection windows that have been reset according to the detected indicators of FIG. 4B.

Referring to FIG. 5A, linking area 1 is positioned between ECC0 and ECC1, linking area 2 is positioned between ECC1 and ECC2, and linking area 3 is positioned after ECC2. According to this embodiment of the present invention, a VFO indicator is arranged at a predetermined position of a VFO included in each linking area. Accordingly, it can be predicted that a succeeding frame begins a predetermined time after a VFO indicator is detected.

That is, a VFO indicator 47 is arranged at a predetermined position of a VFO included in a linking area 1, and ECC1 begins an interval L after the VFO indicator 47 in the linking area 1. A VFO indicator 47 is also arranged at a predetermined position of a VFO included in a linking area 2, and ECC2 begins an interval L after the VFO indicator 47 in the linking area 2. Also, a VFO indicator 47 is arranged at a predetermined position of a VFO included in a linking area 3, and ECC3 begins an interval L after the VFO indicator 47 in the linking area 3. Thus, though the lengths of intervals of linking areas 1 through 3 are all different, by arranging a VFO indicator at a predetermined position within a VFO, a succeeding frame can be found at a position a predetermined distance after a position at which the VFO indicator is arranged.

Referring to FIG. 5B, as described above, since the indicator of a VFO has a pattern distinguishable from the pattern used in the VFO, the VFO indicator can be detected.

Referring to FIG. 5C, it can be seen that by referring to the indicator detected in FIG. 5B, a protection window is reset. That is, since it is learned that a frame begins at a position a predetermined distance after a position where the VFO indicator is detected, if a protection window is reset an interval L after the VFO indicator is detected, a frame sync from which a succeeding frame begins can be accurately detected. FIG. 5C shows that a protection window 51 is reset by the VFO indicator of linking area 1, a protection window 52 is reset by the VFO indicator of linking area 2, and a protection window 53 is reset by the VFO indicator of linking area 3.

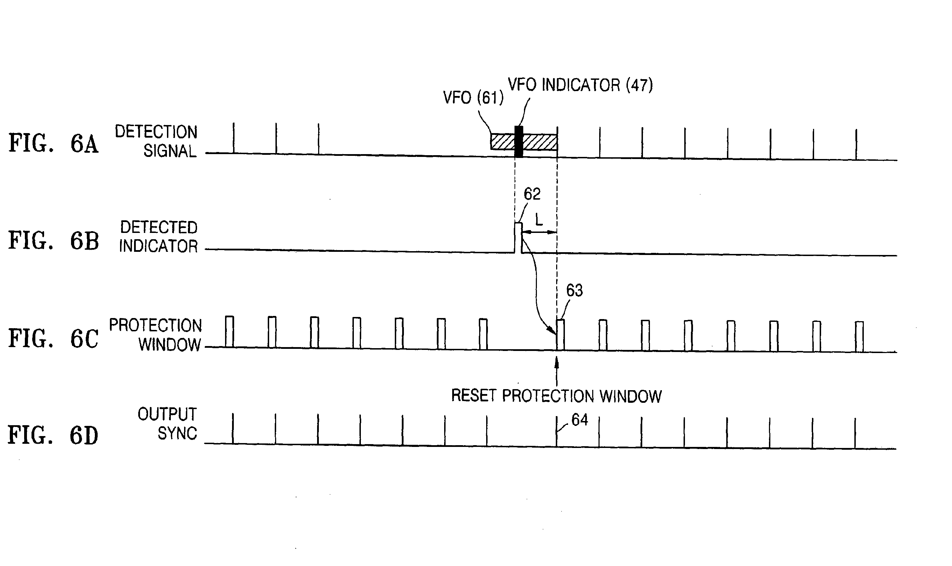

FIGS. 6A-6D are timing diagrams illustrating a concept of detecting and restoring a frame sync with reference to an indicator inserted into a VFO signal part according to an embodiment of the present invention. FIG. 6A illustrates a detection signal of a reproduction signal string, FIG. 6B illustrates an indicator detected in the reproduction signal string, FIG. 6C illustrates protection windows, and FIG. 6D illustrates sync output according to the protection windows.

Referring to FIG. 6A, a VFO indicator 47 is arranged at a predetermined position in a VFO 61 included in the detection signal of the reproduction signal string. Referring to FIG. 6B, it can be seen that the indicator detection signal is transited to a "high" logic level at a position where an indicator having a pattern distinguishable from the pattern used in the VFO is detected. Referring to FIG. 6C, a protection window 63 is reset an interval L after the indicator detection signal is transited to a "high" logic level, and a reset protection window 63 is arranged. Referring to FIG. 6D, based on the reset protection window 63, the frame sync of the next frame is accurately detected and output 64.

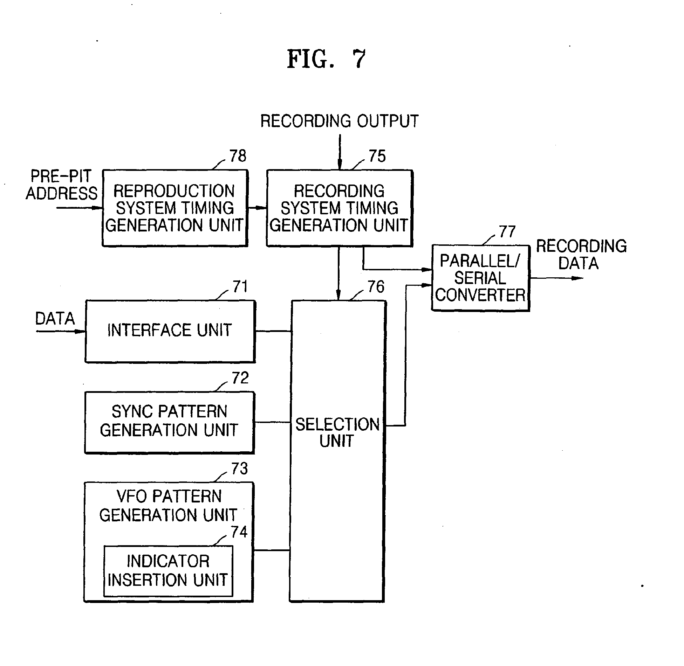

FIG. 7 is a schematic block diagram of the structure of a recording apparatus according to an embodiment of the present invention. Referring to FIG. 7, the recording apparatus includes an interface unit 71, a sync pattern generation unit 72, a VFO pattern generation unit 73, a recording system timing generation unit 75, a selection unit 76, a parallel/serial converter 77, and a reproduction system timing generation unit 78. While described as a recording apparatus, it is understood that the apparatus can further perform reproduction according to an aspect of the invention.

If a pre-pit address recorded in advance on a disk is accurately detected, the reproduction system timing generation unit 78 outputs an ID detection signal, and initializes the recording system timing generation unit 75. In order to perform a recording operation according to a predetermined recording format, the recording system is controlled by a variety of timing signals generated by the recording system timing generation unit 75.

More specifically, the recording system timing generation unit 75 operates to provide a plurality of timing signals to a control unit (not shown), the selection unit 76, and the parallel/serial converter 77. The selection unit 76 receives data from the control unit through the interface unit 71, a sync pattern from the sync pattern generation unit 72, and a VFO pattern from the VFO pattern generation unit 73. The selection unit 76 selects one of these signals based on a timing signal transmitted by the timing generation unit 75, and provides the selected signal to the parallel/serial converter 77. The parallel/serial converter 77 converts data output from the selection unit 76 into a parallel/serial signal and outputs the converted signal as recording data complying with a specific format.

In particular, according to this embodiment of the present invention, the VFO pattern generation unit 73 includes an indicator insertion unit 74. The indicator insertion unit 74 inserts an indicator having a pattern, distinguishable from a VFO pattern, into a predetermined position of the VFO pattern generated in the VFO pattern generation unit 73. By thus inserting the indicator in a predetermined position within the VFO pattern, a reproducing apparatus can accurately determine a position at which a new frame begins as being located a predetermined time after the indicator arranged in the VFO pattern is detected. Also, for more reliable detection of an indicator, the indicator insertion unit 74 may insert more than one indicator with predetermined intervals.

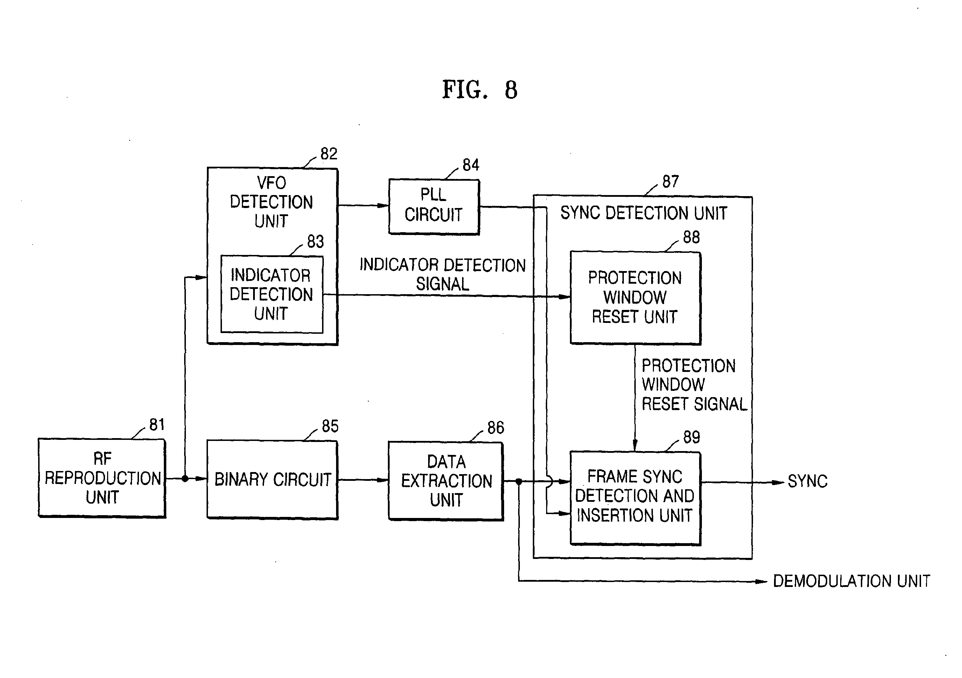

FIG. 8 is a schematic block diagram of the structure of a reproducing apparatus according to an embodiment of the present invention. The structure shown in FIG. 8 does not show all structures included in a reproducing apparatus, and is mainly intended to show a decoding unit in relation to sync detection. It is understood that the reproducing apparatus can further include a recording capability, such as using the apparatus shown in FIG. 7, or portions thereof.

Referring to FIG. 8, the reproducing apparatus includes an RF reproduction unit 81, a VFO detection unit 82, a PLL circuit 84, a binary circuit 85, a data extraction unit 86, and a sync detection unit 87. In particular, according to this embodiment of the present invention, the sync detection unit 87 includes a protection window reset unit 88 and a frame sync detection and insertion unit 89.

In order to predict the position of a VFO, the reproducing system detects a pre-pit address or a sector mark recorded in advance on the disk with an embossing technology, or detects a reproduction RF signal indicating the position of the VFO, and activates a PLL to pull in the phase of the reproduction RF signal of the VFO. The position of the VFO is determined by detecting the reproduction RF signal. Then, the PLL is activated to detect a sync pattern after the VFO. Then, the detected sync pattern is used as a synchronization pattern.

The reproduction RF signal read from the disk is amplified through the RF reproduction unit 81 and equalized. The processed signal is provided to the VFO detection unit 82 and the binary circuit 85. The VFO detection unit 82 detects the RF reproduction signal of the VFO and provides the detected signal to the PLL circuit 84. The binary circuit 85 digitizes the RF reproduction signal, and provides the digitized signal to the data extraction unit 86. The sync detection unit 87 pulls in the digitized RF reproduction signal, and the output of the PLL circuit 84 operates as a reproduction clock.

The data extraction unit 86 extracts a sync and data from the digitized RF reproduction signal output from the binary circuit 85, and provides them to the demodulation unit (not shown) of the sync detection unit 87. The sync detection unit 87 detects a sync from the reproduction RF signal provided by the data extraction unit 86, and outputs the detected sync.

In particular, according to this embodiment of the present invention, the VFO detection unit 82 includes an indicator detection unit 83. If, from the input VFO pattern, the indicator detection unit 83 detects an indicator having a pattern distinguishable from the VFO pattern, the indicator detection unit 83 outputs the indicator detection signal to the protection window reset unit 88 of the sync detection unit 87.

If the indicator detection signal from the indicator detection unit 83 is received, the protection window reset unit 88 provides a protection window reset signal to the frame sync detection and insertion unit 89 a predetermined time after the indicator signal is received.

If the protection window reset signal from the protection window reset unit 88 is received, the frame sync detection and insertion unit 89 resets a protection window and detects a frame sync. That is, when the reset protection window is generated, it is determined whether or not a detection sync is generated, and if a frame sync is detected when the reset protection window is generated, the detected sync is output as a sync. If a frame sync is not detected when the reset protection window is generated, an insertion frame sync is inserted and the inserted frame sync is output.

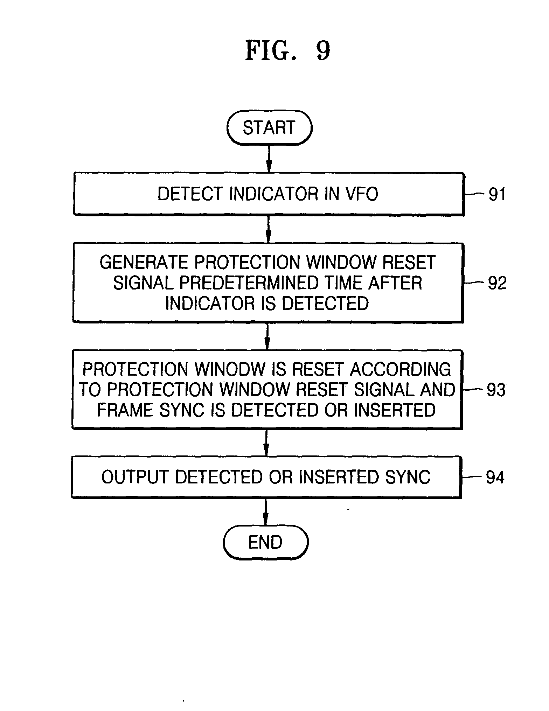

FIG. 9 is a flowchart of the opeartions performed by a method of detecting and restoring a frame sync according to an embodiment of the present invention. Referring to FIG. 9, the indicator detection unit 83 detects an indicator in the VFO of the reproduction signal from the RF reproduction unit 81 in operation 91, and an indicator detection signal is output to the protection window reset unit 88 of the sync detection unit 87.

If the indicator detection signal is received, in operation 92, the protection window reset unit 88 outputs a protection window reset signal to the frame sync detection and insertion unit 89 a predetermined time after the indicator is detected.

Next, the frame sync detection and insertion unit 89 resets a protection window according to the protection window reset signal received from the protection window reset unit 88, and detects or inserts a frame sync according to the reset protection window in operation 93.

Next, the detected or inserted frame sync is output in operation 94.

While not required, it is understood that aspects of the invention, such as the indicator insertion unit, the indicator detection unit, and/or the method of FIG. 9 can be implemented as computer software or firmware implemented by at least one computer.

According to embodiments of the present invention as described above, even though a linking area is variable, the position of a succeeding data area can be predicted such that restoration of a sync pattern is enabled and the stability of a system can be improved. That is, a protection window is generated at a predicted position of a frame sync pattern, and when the system is stable but a sync pattern is not detected, an insertion sync can be inserted at a position where a sync pattern is expected to be detected.

Also, it is not necessary to initialize the stabilization part of a system at each ECC due to a variable linking area. This is because when an error occurs in a sync pattern in a linking part, an insertion sync can be inserted based on the stabilization of the system, and, as a result, the decoding performance is improved.

Although a few embodiments of the present invention have been shown and described, it would be appreciated by those skilled in the art that changes may be made in these embodiments without departing from the principles and spirit of the invention, the scope of which is defined in the claims and their equivalents.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. An information recording medium on which a data signal having a variable frequency oscillator (VFO) signal part (46) and a data signal part (42) are recorded, wherein an indicator (47) having a pattern which a reproducing apparatus uses to distinguish the indicator from a pattern used in the VFO signal part is included at a predetermined position within the VFO signal part (46).

2. The recording medium of claim 1, wherein the indicator (47) is one of a plurality of indicators included within the VFO signal part (46).

3. The recording medium of claim 2, wherein the plurality of indicators are separated by predetermined intervals.

4. The recording medium of any of claims 1-3, wherein the indicator (47) is used to reset a protection window (51) a predetermined time (2) after the indicator (47) is detected.

5. A method of recording a data signal having a variable frequency oscillator (VFO) signal part (46) and a data signal part (48) on an information recording medium, the method comprising:
recording the VFO signal part (46), in which an indicator (47) having a pattern which a reproducing apparatus uses to distinguish the indicator from a pattern used in the VFO signal part is arranged at a predetermined position within the VFO signal part, on the information recording medium.

6. The method of claim 5, wherein the indicator (47) is one of a plurality of indicators arranged at predetermined positions within the VFO signal part (46).

7. The method of claim 6, wherein the plurality of indicators are separated by predetermined intervals.

8. A method of reproducing a data signal having a variable frequency oscillator (VFO) signal part (46) and a data signal part (48) on a rewritable recording medium, the method comprising:
detecting an indicator (47) in the VFO signal part (46), the indicator having a pattern which a reproducing apparatus uses to distinguish the indicator from a pattern used in the VFO signal part; and
decoding the data signal part (48) by detecting and inserting a sync pattern of the data signal part based on the indicator detection.

9. The method of claim 8, wherein detecting the indicator comprises detecting at least one of a plurality of indicators in the VFO signal part.

10. The method of claim 9, wherein the plurality of indicators are separated by predetermined intervals.

11. The method of any of claims 8-10, wherein decoding the data signal part comprises:
resetting a protection window a predetermined time (2) after the indicator is detected; and
detecting and inserting a frame sync based on the reset protection window.

12. An apparatus to record a data signal having a variable frequency oscillator (VFO) signal part (46) and a data signal part (48) on an information recording medium, the apparatus comprising:
a control unit operable to control recording such that the VFO signal part (46), in which an indicator (47) having a pattern which a reproducing apparatus uses to distinguish the indicator from a pattern used in the VFO signal part (46) is arranged at a predetermined position within the VFO signal part, is recorded on the information recording medium.

13. The apparatus of claim 12, wherein the indicator (47) is one of a plurality of indicators arranged in predetermined positions within the VFO signal part.

14. An apparatus to reproduce a data signal having a variable frequency oscillator (VFO) signal part (46) and a data signal part (48) on a rewritable recording medium, the apparatus comprising:
a decoding unit (82) operable to detect, from the VFO signal part (46), an indicator (47) having a pattern which a reproducing apparatus uses to distinguish the indicator from a pattern used in the VFO signal part, and to decode the data signal part by restoring a sync pattern of the data signal part based on the indicator detection.

15. The apparatus of claim 14, wherein the decoding unit (82) is operable to detect at least one of a plurality of indicators from the VFO signal part.

16. The apparatus of claim 15, wherein the plurality of indicators are separated by predetermined intervals.

17. An apparatus to detect a sync from a data signal having a variable frequency oscillator (VFO) signal part (46) and a data signal part (48) recorded on an information recording medium, the apparatus comprising:
an indicator detection unit (83) operable to detect an indicator (47) in the VFO signal part (46), the indicator having a pattern which a reproducing apparatus uses to distinguish the indicator from a pattern used in the VFO signal part; and
a sync output unit (87) operable to output the sync by detecting and inserting a sync pattern of the data signal part based on the indicator detection.

18. The apparatus of claim 17, wherein the indicator detection unit (83) is operable to detect at least one of a plurality of indicators from the VFO signal part.

19. The apparatus of claim 18, wherein the plurality of indicators are separated by predetermined intervals.

20. The apparatus of any of claims 17-19, wherein the sync output unit (87) comprises:
a protection window reset unit (88) operable to output a protection window reset signal a predetermined time after the indicator is detected; and
a frame sync detection and insertion unit (89) operable to reset a protection window in response to the protection window reset signal, and to detect and insert a frame sync according to the reset protection window.

21. A method of predicting a position of a succeeding data area (48) with a variable linking area in an information recording medium, the method comprising:
detecting an indicator (47) in a variable frequency oscillator (VFO) field (46) corresponding to the data area (48), the indicator having a pattern which a reproducing apparatus uses to distinguish the indicator from a pattern used in the VFO field;
wherein the data area begins at a predetermined interval (2) after the indicator in the information recording medium.

22. A computer readable medium encoded with instructions for implementing the method of any of claims 5-11 using at least one computer.
